# EUROPEAN PATENT APPLICATION

(11) **EP 4 603 234 A1**
(43) Date of publication of application: **20.08.2025**
(21) Application number: 24199091.0
(22) Date of filing: 06.09.2024
(51) Int. Cl.: B25J 9/16, G05B 19/418

(54) **SEAT TRACK LOADING/UNLOADING SYSTEM AND METHOD, AND SYSTEM AND METHOD FOR CORRECTING LOADING SETTLEMENT POSITION OF SEAT TRACK**

(30) Priority: 24.11.2023 KR 20230165957; 15.02.2024 KR 20240021770
(71) Applicant: Hanul System Co., Ltd., Daegu 42922 (KR)
(72) Inventor: KIM, Ho Young, 41424 Daegu (KR)
(74) Representative: Beck & Rössig European Patent Attorneys

(57) **Abstract**

Disclosed is a seat track loading/unloading system including a cart where a seat track is loaded and unloaded, an unmanned transport vehicle configured to carry the cart, a seat track loading/unloading robot on which a gripper is mounted to unload the seat track from the cart, and a conveyor on which the seat track is loaded, and a corresponding method. Further disclosed are a system for correcting a loading settlement position of a seat track, and a method of correcting a loading settlement position of a seat track.

## Description

### CROSS-REFERENCE TO RELATED APPLICATION

This application claims priority to and the benefit of Korean Patent Application No. 10-2023-0165957, filed on November 24, 2023, and No. 10-2024-0021770, filed on February 15, 2024, the disclosure of which is incorporated herein by reference in its entirety.

### BACKGROUND

### 1. Field of the Invention

The present invention relates to a seat track loading/unloading system and method, and a system and method for correcting a loading settlement position of a seat track, and more specifically, to a seat track loading/unloading system and method using which a seat track is loaded and unloaded without human labor using an unmanned transport vehicle and a seat track loading/unloading robot and the seat track loading/unloading robot can self-correct the position of the seat track so that there is no misalignment of the loading settlement position of the seat track, and a system and method for correcting a loading settlement position of a seat track for improving the accuracy of a process in which the seat track is loaded and seated.

### 2. Discussion of Related Art

A seat track includes a lower rail fixedly installed on a vehicle's floor panel, an upper rail that is slidably coupled to the lower rail and on which a seat is mounted, and a gearbox that moves forward and backward along a lead screw, which is installed on the lower rail, using a driving means while being fixed to the upper rail.

When these seat tracks are transported to other factories after production, they are loaded onto a pallet and moved. In some cases, the seat tracks are sometimes manually loaded onto and unloaded from the pallet by workers.

With the recent increase in demand for automated processes and smart factories, it has become necessary to use an automated guided vehicle (AGV) when seat tracks are transported in warehouses. In addition, even after the seat tracks are transported, there is a growing need to establish an automated logistics and manufacturing process by loading and unloading the seat tracks onto and from pallets using seat track loading/unloading robots.

However, although the method of unloading the seat track using the seat track loading/unloading robot has the advantage of automation, there are some problems. For example, when the seat track is gripped by the seat track loading/unloading robot, a phenomenon in which the seat track is slightly distorted may occur, and accordingly, a problem may occur in which the seat track is misaligned when the seat track is loaded onto a delivery pallet.

Accordingly, when the loading settlement position of the seat track on the pallet is not precise, a collision between the vehicle and the seat track may occur during the transportation or installation of the seat track, preventing smooth loading of the seat track. As a result, there is a problem that the vehicle quality and production efficiency can be reduced due to damage such as scratches or breakage of the vehicle or seat track.

Therefore, there is also a growing need for a system that corrects the position of the seat track during loading using the seat track loading/unloading robot.

Meanwhile, when these car seat tracks are transported to other factories after production, they are moved by being seated on the pallet. In this case, the car seat tracks are either manually loaded onto and unloaded from the pallet by workers or automatically seated thereon by a robot controlled by a program.

However, in a seat track loading method using a robot, when the vehicle seat is gripped by the robot, the car seat track may be slightly distorted, and accordingly, there is a problem that the car seat track is misaligned when seated on the pallet for delivery.

When the settlement position of the car seat track on the pallet is not precise, a collision between the vehicle and the seat track may occur during the transportation or installation of the seat track, preventing smooth loading of the seat track. As a result, there is a problem that the vehicle quality and production efficiency can be reduced due to damage such as scratches or breakage of the vehicle or seat track.

### SUMMARY OF THE INVENTION

The present invention is directed to providing a seat track loading/unloading system and method, which improve the position and stability of a seat track and establishes an automated seat track manufacturing process by utilizing an unmanned transport vehicle and a seat track loading/unloading robot in the seat track manufacturing process, and a system and method for correcting a loading settlement position of a seat track, which improve the position and stability of a seat track by solving minute errors and misalignment problems that occur when a car seat track is seated on a pallet or other transport devices.

According to an aspect of the present invention, there is provided a seat track loading/unloading system, which includes a cart where a seat track is loaded and unloaded, an unmanned transport vehicle configured to carry the cart, a seat track loading/unloading robot on which a gripper is mounted to unload the seat track from the cart, and a conveyor on which the seat track is loaded, wherein the conveyor includes a second camera that captures an image of a mounting hole or mounting pin of the seat track, a memory that stores the image acquired from the camera, a second processor that calculates a correction position value of the seat track by comparing the stored image with a reference image, and a second pallet on which the seat track loading/unloading robot loads the seat track.

In one embodiment of the present invention, the cart may include a first pallet where the seat track is loaded and unloaded, a first camera that identifies a settlement position, and a first processor that transmits the correction position value to the seat track loading/unloading robot based on the settlement position of the first camera.

In one embodiment of the present invention, the first camera may confirm the number of remaining seat tracks in the cart, and the first processor may receive information about the number of remaining seat tracks from the first camera and transmits the received information to the unmanned transport vehicle.

In one embodiment of the present invention, the unmanned transport vehicle may transport the cart to one of a plurality of predetermined areas and move the cart to a space other than the plurality of areas when all the seat tracks in the cart are unloaded.

In one embodiment of the present invention, the unmanned transport vehicle further includes a calculation module for calculating a movement path of the unmanned transport vehicle and a shortest waiting time, and moves along the movement path that can achieve the shortest waiting time according to the calculation module.

In one embodiment of the present invention, the seat track loading/unloading robot may unload the seat track from the cart in the area with the fewest number of seat tracks among carts in the plurality of areas.

In one embodiment of the present invention, the seat track loading/unloading robot may correct a position of the seat track based on the correction value acquired from the second processor.

In one embodiment of the present invention, the second processor may provide a correction value that matches the seat track using a radio frequency ID (RFID) recognition system.

In one embodiment of the present invention, the second processor may set a feature point based on the mounting hole and the mounting pin and determine the correction position value based on the feature point.

In one embodiment of the present invention, when a position change between a reference feature point and a feature point of a current seat, the second processor may determine a position based on three degrees of freedom for a lateral distance difference, a longitudinal distance difference, and an angle.

According to another aspect of the present invention, there is provided a seat track loading/unloading method, which includes moving, by an unmanned transport vehicle, a cart including a seat track and a first pallet to one of a plurality of predetermined areas, unloading, by a seat track loading/unloading robot, the seat track from the cart positioned in the predetermined area using a correction position value calculated through a first processor, acquiring, by a second camera, an image of the seat track, calculating the correction position value through a second processor and loading, by the seat track loading/unloading robot, the seat track to a second pallet based on the calculated correction position value, and allowing the seat track loading/unloading robot to return to an original potion after loading the seat track on the second pallet, wherein the calculating of the correction position value through the second processor and the loading, by the seat track loading/unloading robot, of the seat track on the second pallet may set a feature point based on a mounting hole and a mounting pin and correct a position based on the feature point.

In one embodiment of the present invention, the moving, by the unmanned transport vehicle, of the cart including the seat track to the one of the plurality of predetermined areas may include determining, by a calculation module, a shortest movement path algorithm of the cart; and moving the unmanned transport vehicle according to the determined algorithm.

In one embodiment of the present invention, the unloading, by the seat track loading/unloading robot, of the seat track from the cart positioned in the predetermined area using the correction position value calculated through the first processor may further include checking the number of seat tracks in the cart for each area, moving, by the unmanned transport vehicle, the cart positioned in the area where all the seat tracks are unloaded to a position other than the plurality of predetermined areas; and unloading, by the seat track loading/unloading robot, the seat track in the area with the fewest number of seat tracks.

According to still another aspect of the present invention, there is provided a system for correcting a loading settlement position of a seat track, which includes a cushion frame robot on which a gripper is mounted to unload a seat track a camera configured to acquire an image of a mounting hole or mounting pin of the seat track a memory configured to store the image acquired from the camera and a processor configured to compare the stored image with a reference image to calculate a correction position value of the seat track, wherein the cushion frame robot includes a device that corrects a position of the seat track based on the correction value acquired from the processor, and the device sets a feature point based on the mounting hole and the mounting pin and sets the feature point to a reference image, collects position information of the mounting pin and mounting hole of the reference image and position information of the mounting hole and mounting pin of the captured image of the seat track, calculates a position change between the position information of the mounting pin and mounting hole of the reference image and the mounting hole and mounting pin of the captured image of the seat track, and calculates and corrects the correction value based on a position change calculation result.

In one embodiment of the present invention, the processor may provide the correction value that matches a car seat track using an RFID recognition system.

In one embodiment of the present invention, the processor may set a feature point based on the mounting hole and the mounting pin to correct the position based on the feature point.

According to yet another aspect of the present invention, there is provided a method of correcting a loading settlement position of a seat track, which includes positioning a seat track on a track pallet, checking a track pallet-settlement position of the seat track, correcting the track pallet-settlement position of the seat track, positioning the seat track on a conveyor jig pallet, checking a conveyor jig pallet-settlement position of the seat track, correcting the conveyor jig pallet-settlement position of the seat track, and allowing the cushion frame robot to return to an original position after the seat track is seated on the conveyor jig pallet, wherein the correcting of the track pallet-settlement position of the seat track includes setting a feature point based on a mounting hole and a mounting pin and correcting the track pallet-settlement position based on the feature point, collecting position information of the mounting pin and mounting hole of a reference image and position information of the mounting hole and mounting pin of a captured image of the seat track, calculating a position change between the position information of the mounting pin and mounting hole of the reference image and the position information of the mounting hole and mounting pin of the captured image of the seat track, calculating a correction value of the cushion frame robot based on a position change calculation result, and correcting, by the cushion frame robot, a loading settlement position of the seat track using the calculation value.

In one embodiment of the present invention, the correcting of the conveyor jig pallet-settlement position of the seat track may set a feature value based on a mounting hole and a mounting pin to correct a position based on the feature point.

In one embodiment of the present invention, when a position change between a reference feature point and a feature point of a current seat is calculated, a position may be determined based on three degrees of freedom for a lateral distance difference, a longitudinal distance difference, and an angle.

In one embodiment of the present invention, the correcting of the conveyor jig pallet-settlement position of the seat track may include collecting the position information of the mounting hole and mounting pin of the reference image and the position information of the mounting hole and mounting pin of the captured image of the seat track, calculating a position change between the position information of the mounting hole and mounting pin of the reference image and the position information of the mounting hole and mounting pin of the captured image of the seat track, calculating a correction value of the cushion frame robot based on a position change calculation result, and correcting, by the cushion frame robot, a loading settlement position of the seat track using the calculation value.

In one embodiment of the present invention, when the position change between the reference feature point and the feature point of the current seat is calculated, the position may be determined based on three degrees of freedom for a lateral distance difference t, a longitudinal distance difference, and an angle.

In one embodiment of the present invention, the positioning of the seat on the track pallet may further include detecting an RFID tag attached to the seat and acquiring specifications of a component mounted on the seat.

In one embodiment of the present invention, the correcting of the track pallet-settlement position of the seat may correct the track pallet-settlement position based on the specifications of the component acquired through the RFID tag.

In one embodiment of the present invention, the correcting of the conveyor jig pallet-settlement position of the seat may correct the conveyor jig pallet-settlement position based on the specifications of the component acquired through the RFID tag.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a block diagram schematically illustrating communication of a first processor according to one embodiment of the present invention;
FIG. 2 is a block diagram schematically illustrating communication of a conveyor according to one embodiment;
FIG. 3 is a diagram schematically illustrating an entire seat track loading/unloading system;
FIG. 4 is a diagram schematically illustrating a cart, an unmanned transport vehicle, and a seat track loading/unloading robot;
FIG. 5A is a perspective diagram illustrating a case in which an image is acquired for correction before a seat track is seated on a second pallet;
FIG. 5B is a perspective diagram illustrating a seat track loading/unloading robot, a conveyor, a second pallet, and a seat track after the seat track is seated according to a correction position;
FIG. 6A is a detailed flowchart illustrating an operation in which an unmanned transport vehicle moves a cart including a seat track to one of a plurality of predetermined areas;
FIG. 6B is a detailed flowchart illustrating an operation in which a seat track loading/unloading robot loads a seat track on a cart located in a designated area;
FIG. 7 is a block diagram schematically illustrating a configuration of a device according to one embodiment of the present invention;
FIG. 8 is a diagram schematically illustrating a seat track and a camera according to one embodiment;
FIG. 9 is a perspective diagram illustrating a device and a track pallet according to one embodiment;
FIG. 10 is a perspective diagram illustrating a device and a conveyor jig pallet according to one embodiment;
FIG. 11A is a flowchart illustrating each operation in which a device is operated according to one embodiment;
FIG. 11B is a flowchart illustrating another example of an operation in which a device corrects a settlement position according to one embodiment;
FIG. 11C is a flowchart illustrating another example when a device has a radio frequency ID (RFID) recognition system according to one embodiment;
FIG. 12 is a diagram illustrating a reference image stored in a memory according to one embodiment; and
FIG. 13 is a diagram illustrating an image captured by a camera according to one embodiment.

### DETAILED DESCRIPTION OF EXEMPLARY EMBODIMENTS

Hereinafter, embodiments of the present invention will be described in detail with reference to the accompanying drawings. However, the present invention may be implemented in various different forms and is not limited to the embodiments described herein. In the drawings, parts irrelevant to the description are omitted in order to clearly describe the present invention, and the same reference numerals are assigned to the same or similar components throughout the specification.

Throughout the specification, when a part is said to be "connected" with another part, this includes not only the case of being "directly connected" but also being "indirectly connected" with another member interposed therebetween. In addition, when a part "includes" a certain component, it means that other components may be further included rather than excluding other components unless specifically stated to the contrary.

Hereinafter, one embodiment of the present invention will be described in detail with reference to the accompanying drawings.

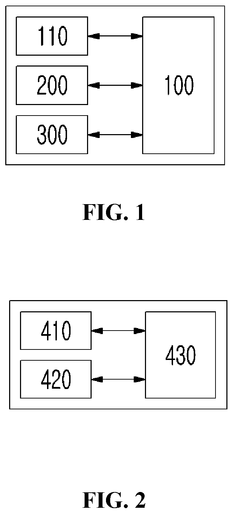

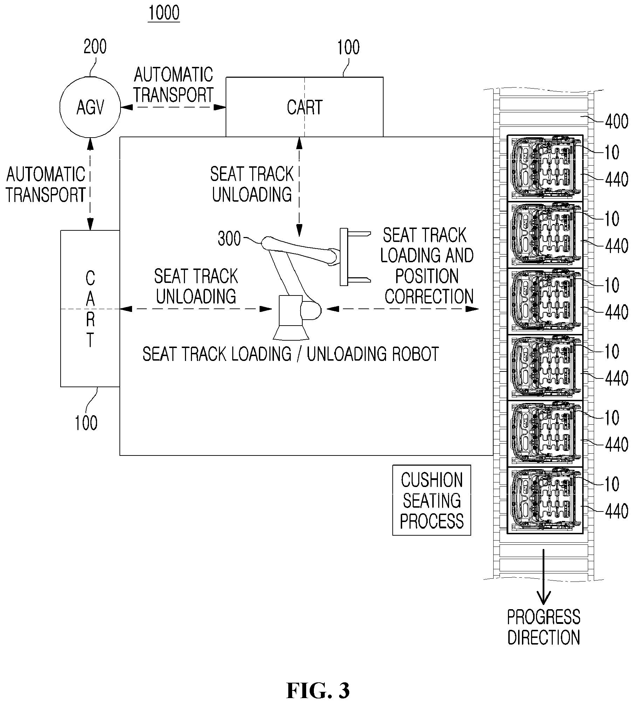

FIG. 1 is a block diagram schematically illustrating communication of a first processor 120 according to one embodiment of the present invention. FIG. 2 is a block diagram schematically illustrating communication of a conveyor 400 according to one embodiment. FIG. 3 is a diagram schematically illustrating an entire seat track loading/unloading system 1000.

Referring to FIGS. 1 to 3, the seat track loading/unloading system 1000 may include a cart 100, an unmanned transport vehicle 200, a seat track loading/unloading robot 300, and the conveyor 400.

The cart 100 may further include a first camera 110, a first processor 120, and a first pallet 130.

The cart 100 is transported by the unmanned transport vehicle 200 and may serve to load seat tracks 10 and move them to a designated area.

In this case, the first camera 110 serves to identify the settlement position of the seat tracks 10 within the cart 100 and determine the number of remaining seat tracks 10 in the cart 100.

Referring to FIG. 1, the first processor 120 may transmit information on the settlement position of the seat track 10 obtained from the first camera 110 and the number of remaining seats in the cart 100 to the unmanned transport vehicle 200 and the seat track loading/unloading robot 300.

Specifically, the first processor 120 may calculate a correction position value based on the information on the settlement position obtained from the first camera 110 and transmit the correction position value to the seat track loading/unloading robot 300.

In addition, when all the seat tracks 10 are unloaded from the cart 100, the first processor 120 may transmit the correction position value to the unmanned transport vehicle, enabling the unmanned transport vehicle 200 to move the cart 100.

The first pallet 130 means a pallet for loading the seat track 10 onto the cart 100.

The unmanned transport vehicle 200 may further include a calculation module 210.

The unmanned transport vehicle 200 may serve to move the cart 100 to a designated area. The designated area may be one of a plurality of predetermined areas.

Depending on the location of the designated area, the calculation module 210 calculates values for the rotation angle and positional displacement of the seat track loading/unloading robot 300 and transmits the calculated values to the seat track loading/unloading robot 300 to rotate.

When the unmanned transport vehicle 200 moves and enters and exits one of the plurality of predetermined areas, the unmanned transport vehicle 200 may move after selecting the shortest waiting time and movement path by an algorithm calculated by the calculation module 210.

The calculation module 210 may calculate the shortest waiting time and movement path, and accordingly, move the unmanned transport vehicle 200.

In addition, the calculation module 210 may calculate the rotation angle and positional displacement of the seat track loading/unloading robot 300 according to the predetermined designated area.

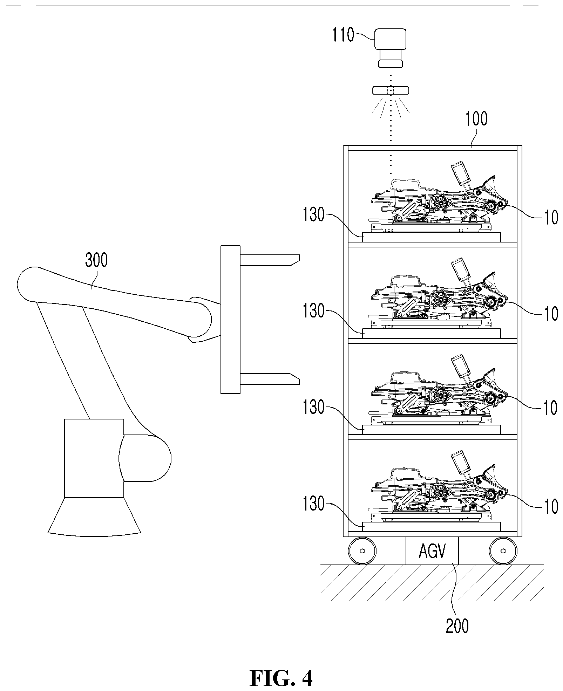

FIG. 4 is a diagram schematically illustrating the cart 100, the unmanned transport vehicle 200, and the seat track loading/unloading robot 300.

The seat track loading/unloading robot 300 is equipped with a gripper to unload the seat tracks 10 from the cart 100 and load the unloaded seat tracks 10 onto the conveyor 400.

In this case, the seat track loading/unloading robot 300 may unload the seat tracks 10 from the cart 100 based on a correction position value based on the information obtained from the first processor 120.

In addition, the seat track loading/unloading robot 300 may automatically correct the position of the seat track 10 on the conveyor 400 based on the information obtained through the second camera 410 and the second processor 430 to load the seat track 10.

The gripper may be installed at the end of the seat track loading/unloading robot 300 to grip the seat track 10, and depending on the size, shape, or type of an object to be worked on, and depending on a method of performing operations for assembly, disassembly, or movement, various types of grippers may be installed.

The seat track loading/unloading robot 300 may unload the seat tracks 10 from the cart 100 in the area with the fewest number of seat tracks 10 among the plurality of areas based on the information on the number of seat tracks 10 in the cart 100 received from the first processor 120.

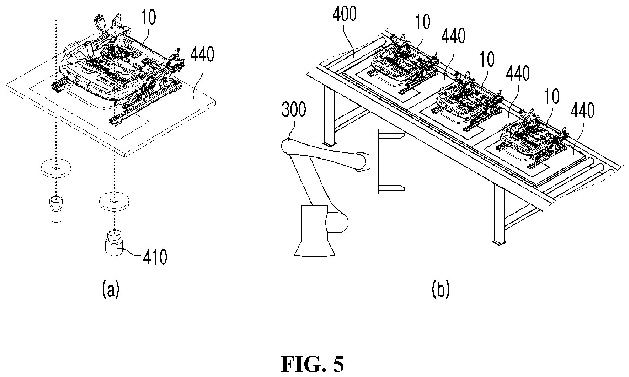

FIG. 5A is a perspective diagram illustrating a case in which an image is acquired for correction before the seat track 10 is seated on the second pallet 440.

FIG. 5B is a perspective diagram illustrating the seat track loading/unloading robot 300, the conveyor 400, the second pallet 440, and the seat track 10 after the seat track 10 is seated according to a correction position.

The conveyor 400 may include a second camera 410, a memory 420, a second processor 430, and the second pallet 440.

The second camera 410 may acquire an image of the mounting hole or mounting pin of the seat track 10.

The memory 420 may store a program code for driving the second processor 430, a reference image, and an image acquired through the second camera 410. Here, the reference image may be provided according to the specifications of the seat track 10. The reference image may be an image of the mounting hole of the seat track 10 when the mounting hole of the seat track 10 is aligned with the mounting pin of the conveyor 400 and the seat track 10 is unloaded.

The second processor 430 may receive information from the memory 420 and control the operation of the second camera 410 and the seat track loading/unloading robot 300 based on the received information.

The second processor 430 may perform machine vision analysis based on the image of the seat track 10 and the reference image, and determine the correction position value of the seat track 10. Specifically, the second processor 430 calculates the positional displacement of the seat track 10 compared to the reference image, and calculates the correction value for the rotation angle and positional displacement of the seat track loading/unloading robot 300 using the calculated positional displacement.

The second processor 430 automatically controls the position and angle of the seat track loading/unloading robot 300 using the calculated correction position value.

In addition, as to the correction of the second processor 430, when a position change between a reference feature point and a feature point of the current seat is calculated, the position may be determined based on three degrees of freedom for a lateral distance difference, a longitudinal distance difference, and an angle.

A radio frequency ID (RFID) recognition system that detects information of an RFID tag (not shown) attached to the seat track 10 may be provided. The RFID recognition system is used to identify an object to which the RFID tag (not shown) is attached. That is, the RFID tag (not shown) has a function similar to a barcode. A difference between the RFID recognition system and a barcode system is that the RFID recognition system use radio waves instead of using light to read. Therefore, the RFID recognition system may read tags from a longer distance, not just a short distance like a barcode reader, and can even receive information through objects in between.

RFID information of the seat track 10 detected by the above RFID recognition system stores information on the parts of the seat track 10 that serve as the assembly criteria for each option. For example, the seat track 10 is composed of various options such as a fabric type, a frame type, a color, and a convenience function, and the RFID information detected by the RFID recognition system may include information on various options such as a fabric type, a frame type, a color, and a convenience function.

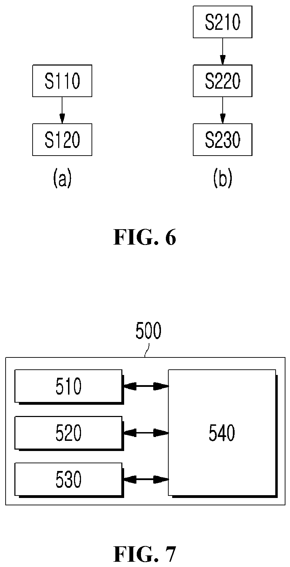

FIG. 6A is a detailed flowchart illustrating an operation in which the unmanned transport vehicle 200 moves the cart 100 including the seat track 10 to one of a plurality of predetermined areas. FIG. 6B is a detailed flowchart illustrating an operation in which the seat track loading/unloading robot 300 loads a seat track on the cart 100 located in a designated area.

A seat track loading method S 10 may include operation S 100 of moving, by an unmanned transport vehicle, a cart including a seat track to one of a plurality of predetermined areas, operation S200 of unloading, by a seat track loading/unloading robot, the seat track from the cart positioned in a designated area using a correction position value calculated by a first processor, operation S300 of acquiring, by a second camera, an image of the seat track, operation S400 of calculating a correction position value through a second processor and loading, by the seat track loading/unloading robot, the seat track on a second pallet based on the calculated correction position value, and operation S500 of allowing the seat track loading/unloading robot to return to an original position after the seat track is loaded on the second pallet.

Operation S220 of unloading, by the seat track loading/unloading robot, the seat track from the cart positioned in the designated area using the correction position value calculated by the first processor and operation S400 of calculating the correction position value through the second processor and loading, by the seat track loading/unloading robot, the seat track on the second pallet based on the calculated correction position value may be operations for setting a feature point based on the mounting hole and mounting pin and correcting the position based on the feature point.

Specifically, there is no limitation on the number of mounting holes, but preferably, the mounting pin socket can be unloaded into four mounting holes.

More specifically, operation S200 of unloading, by the seat track loading/unloading robot, the seat track from the cart positioned in the designated area using the correction position value calculated by the first processor and operation S400 of calculating the correction position value through the second processor and loading, by the seat track loading/unloading robot, the seat track on the second pallet based on the calculated correction position value may further include collecting position information of the mounting pin and mounting hole of a reference image and position information of the mounting hole and mounting pin of the captured image of the seat track 10; calculating a position change between the position information of the mounting pin and mounting hole of the reference image and the position information of the mounting hole and mounting pin of the captured image of the seat track 10; calculating a correction value of the seat track loading/unloading robot 300 based on the position change calculation result; and correcting, by the seat track loading/unloading robot, the position of the seat track using the calculated value. The seat track loading method may further include an RFID recognition system.

Operation S 100 of moving, by the unmanned transport vehicle, the cart including the seat track to one of the plurality of predetermined areas may further include operation S 110 of determining, by a calculation module, a shortest movement path algorithm of the cart, and operation S 120 of moving the unmanned transport vehicle according to the determined algorithm.

In addition, operation S200 of unloading, by the seat track loading/unloading robot, the seat track from the cart positioned in the designated area using the correction position value calculated by the first processor may further include operation S210 of checking the number of seat tracks 10 in the cart for each area, operation S220 of moving, by the unmanned transport vehicle 200, the cart 100 in the area where all the seat tracks 10 are unloaded to a position other than a plurality of predetermined areas, and operation S230 of unloading, by the seat track loading/unloading robot 300, the seat track 10 in the area with the fewest number of seat tracks 10.

According to one embodiment, a seat track manufacturing process may be automated through the unmanned transport vehicle and the seat track loading/unloading robot, enabling accurate and rapid seat track manufacturing without the need for human labor. In addition, the loading and unloading and movement of the seat track may be efficient according to an algorithm of the unmanned transport vehicle. In addition, the manpower required for transporting and managing the seat track and costs associated with the manpower can be reduced. In addition, by accurately loading the seat track, the position and stability of the seat track may be improved by solving minor errors and misalignment problems. In addition, seat track production quality and quality data may be managed to improve productivity of the seat track.

Hereinafter, a system for correcting a seat track loading settlement position and a method thereof will be described.

Hereafter, embodiments of the present invention will be described in detail with reference to the accompanying drawings.

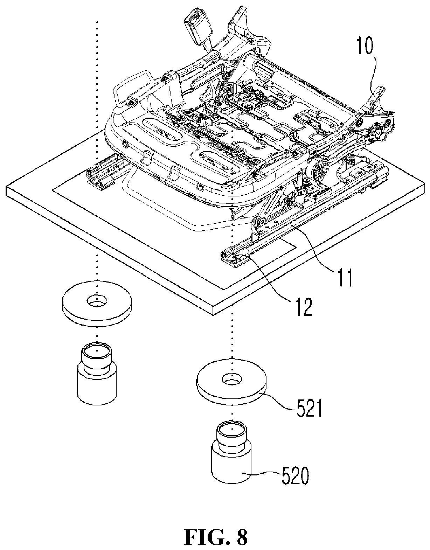

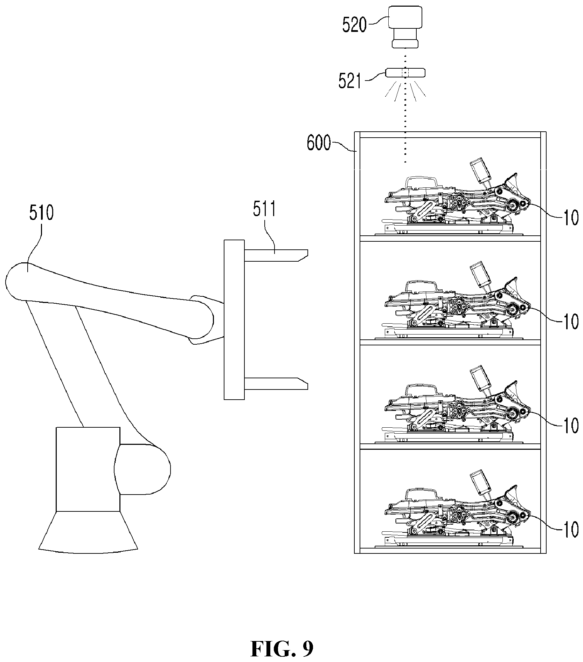

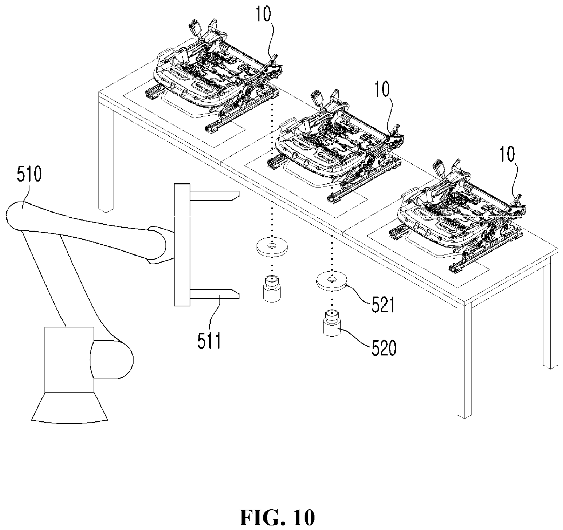

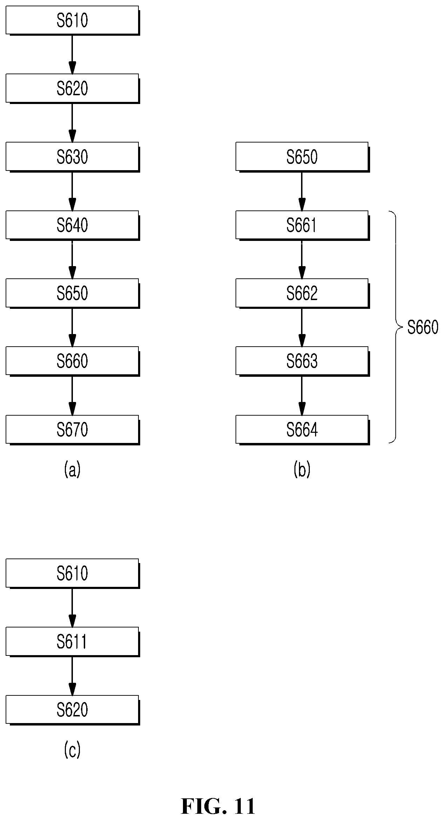

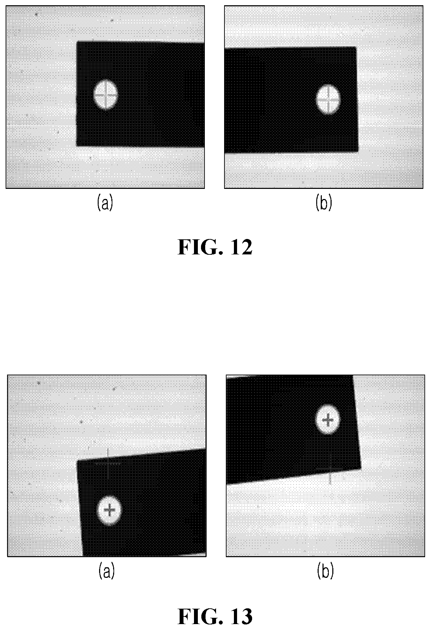

FIG. 7 is a block diagram schematically illustrating a configuration of a device according to one embodiment of the present invention. FIG. 8 is a diagram schematically illustrating a seat track and a camera according to one embodiment. FIG. 9 is a perspective diagram illustrating a device and a track pallet according to one embodiment. FIG. 10 is a perspective diagram illustrating a device and a conveyor jig pallet according to one embodiment. FIG. 11A is a flowchart illustrating each operation in which a device is operated according to one embodiment. FIG. 11B is a flowchart illustrating another example of an operation in which a device corrects a settlement position according to one embodiment. FIG. 11C is a flowchart illustrating another example when a device has an RFID recognition system according to one embodiment. FIG. 12 is a diagram illustrating a reference image stored in a memory according to one embodiment. FIG. 13 is a diagram illustrating an image captured by a camera according to one embodiment.

Referring to FIG. 7, a device 500 may include a cushion frame robot 510, one or more cameras 520, a memory 530, and a processor 540.

Referring to FIGS. 8 to 9, a gripper 511 for performing tasks such as gripping and moving an object to be worked on may be mounted at the end of the cushion frame robot 510.

The gripper 511 may be installed at the end of the cushion frame robot 510 to grip the car seat track 10, and depending on the size, shape, or type of an object to be worked on, and depending on a method of performing operations for assembly, disassembly, or movement, various types of grippers 511 may be installed.

The camera 520 may acquire an image of the mounting hole 12 or mounting pin of the car seat track 10.

The car seat track 10 is mounted to the floor panel of the vehicle interior by a seat track rail 11 so that the position of the car seat track 10 can be adjusted forward and backward. In this case, the mounting hole 12 into which a fastening means can be inserted may be formed at each end of the seat track rail 11. For example, when a worker inserts a bolt into the mounting hole 12 using a socket tool or the like and performs bolting, the seat track rail 11 can be fixed to the vehicle on the floor panel.

The camera 520 may acquire an image of the mounting hole 12 or mounting pin of each seat track rail 11, and further include a lighting 521 for illuminating the mounting hole 12 or mounting pin.

Generally, since the indoor environment of a workplace such as a factory is blocked from natural light and is maintained bright by artificial lighting 521, it is desirable that the mounting hole 12 or mounting pin area be illuminated with light by the separate lighting 521 so that the indoor environment of the workplace can be identified at least.

The lighting 521 may be, for example, a plurality of LEDs, but is not limited thereto.

The lighting 521 may provide conditions in which the mounting hole 12 or the mounting pin area may be clearly and distinctly photographed by making the mounting hole 12 or the mounting pin area stand out brighter than the surrounding area.

The memory 530 may store a program code for driving the processor 540, a reference image, and an image acquired through the camera 520. Here, the reference image may be provided according to the specifications of the car seat track 10. The reference image may be an image of the mounting hole 12 of the seat when the mounting hole 12 of the car seat track 10 is aligned with the mounting pin of the pallet and is seated.

The processor 540 may control the operation of the cushion frame robot 510 and the camera 520.

The processor 540 may perform machine vision analysis based on the image of the seat track 10 and the reference image, and determine a correction position value of the seat track 10. Specifically, the processor 540 calculates the positional displacement of the car seat track 10 compared to the reference image and calculates a correction value for the rotation angle and positional displacement of the robot through the calculated positional displacement.

The processor 540 automatically controls the position and angle of the cushion frame robot 510 using the calculated correction position value.

Referring to FIGS. 9 and 10, a system for correcting a seat track loading settlement position may be equipped with a pallet on which the car seat track 10 can be seated, and the pallet may be formed with a mounting pin that is aligned with the mounting hole 12 of the car seat track 10.

The pallet of the system for correcting the seat track loading settlement position may include a track pallet and a conveyor jig pallet. Referring to FIG. 9, the track pallet refers to a pallet on which the seat track 10 is seated before the seat track 10 is seated onto the conveyor by the cushion frame robot 510. In addition, a track pallet-settlement position refers to a position where the seat track 10 is unloaded on the track pallet when the seat track 10 is unloaded on the track pallet. Referring to FIG. 10, the conveyor jig pallet refers to a pallet on the conveyor on which the seat track 10 unloaded from the track pallet by the cushion frame robot 510 is loaded. The conveyor jig pallet-settlement position refers to a position where the seat track 10 is unloaded on the conveyor jig pallet when the seat track 10 is unloaded on the conveyor jig pallet.

An RFID recognition system that detects information of an RFID tag (not shown) attached to the seat track 10 may be provided. The RFID recognition system is used to identify an object to which the RFID tag (not shown) is attached. That is, the RFID tag (not shown) has a function similar to a barcode. A difference between the RFID recognition system and a barcode system is that the RFID recognition system use radio waves instead of using light to read. Therefore, the RFID recognition system may read tags from a longer distance, not just a short distance like a barcode reader, and can even receive information through objects in between.

RFID information of the seat track 10 detected by the above RFID recognition system stores information on the parts of the seat track 10 that serve as the assembly criteria for each option. For example, the seat track 10 is composed of various options such as a fabric type, a frame type, a color, and a convenience function, and the RFID information detected by the RFID recognition system may include information on various options such as a fabric type, a frame type, a color, and a convenience function.

Various embodiments of the above-described configurations will be described in detail below with reference to the drawings below.

In addition, those skilled in the art will understand that other general components may be included in the device 500 in addition to the above-described components. Alternatively, according to other embodiments, those skilled in the art will understand that some of the above-described components may be omitted.

The device 500 according to one embodiment can be used by a user or worker, and may include all kinds of handheld-based wireless communication devices equipped with a touch screen panel, such as a mobile phone, a smartphone, a personal digital assistant (PDA), a portable multimedia player (PMP), a tablet PC, etc. In addition, the device 500 may also include a device capable of installing and executing an application, such as a desktop PC, a tablet PC, a laptop PC, an IPTV including a set-top box.

The device 500 may be implemented as a terminal, such as a computer, that operates through a computer program to implement the functions described in this specification.

The device 500 according to one embodiment may include a server (not shown), but is not limited thereto. The server according to one embodiment may provide an application that displays a captured image.

Hereinafter, an embodiment in which the device 500 according to one embodiment independently calculates a correction value will be mainly described, but as described above, the correction value may also be calculated in conjunction with a server. That is, it can be seen that the device 500 and the server according to one embodiment may be implemented in an integrated manner in terms of their functions, and the server may be omitted, and is not limited to any one embodiment. In addition, the device 500 has been described as a superior concept encompassing the server, and accordingly, embodiments in which the device 500 provides an alarm may be performed by the server.

Referring to FIG. 11A, a method of correcting a seat track loading settlement position according to one embodiment of the present invention may include operation S610 of positioning a seat track on a track pallet, operation S620 of checking a track pallet-settlement position of the seat track, operation S630 of correcting the track pallet-settlement position of the seat track, operation S640 of positioning the seat track on a conveyor jig pallet, operation S650 of checking a conveyor jig pallet-settlement position of the seat track, operation S660 of correcting the conveyor jig pallet-settlement position of the seat track, and operation S670 of allowing a cushion frame robot to return to an original position after the seat track is seated on the conveyor jig pallet.

Specifically, operation S630 of correcting the track pallet-settlement position of the seat track and operation S660 of correcting the conveyor jig pallet-settlement position of the seat track may set feature points with respect to the mounting hole and mounting pin during correction. The position correction may be performed based on the feature points.

In addition, there is no limitation on the number of mounting holes of the pallet, but preferably, the pallet can be installed with four mounting pin sockets in the mounting holes.

In addition, referring to FIG. 11B, operation S630 of correcting the track pallet-settlement position of the seat track and operation S660 of correcting the conveyor jig pallet-settlement position of the seat track may further include operation S661 of collecting position information of the mounting pin and mounting hole of a reference image and position information of the mounting hole and mounting pin of a captured image of the seat track, operation S662 of calculating a position change between the position information of the mounting pin and mounting hole of the reference image and the position information of the mounting hole and mounting pin of the captured image of the seat track, operation S663 of calculating a correction value of the cushion frame robot based on the position change calculation result, and operation S664 of correcting, by the cushion frame robot, the position of the seat track using the calculation value.

Specifically, referring to FIGS. 12 and 13, when a position change between a reference feature point and a feature point of a current seat, the position may be determined and corrected based on three degrees of freedom for a lateral distance difference, a longitudinal distance difference, and an angle.

In addition, the method of correcting the seat track loading settlement position may be a method further using an RFID recognition system.

Specifically, referring to FIG. 11C, operation S610 of positioning the seat track on the track pallet may further include operation S611 of detecting an RFID tag attached to the seat track and acquiring specifications of a component mounted on the seat. In addition, operation S630 of correcting the track pallet-settlement position of the seat track and operation S660 of correcting the conveyor jig pallet-settlement position of the seat track may correct the position based on the specifications of the component obtained through the RFID tag.

In one embodiment, at least one of the components of the device 500 may be omitted, or other components may be added. Additionally or alternatively, some of the components may be implemented in an integrated manner, or implemented as a single or multiple entities.

The operations of the method or algorithm described in connection with the embodiments of the present invention may be implemented directly in hardware, implemented as a software module executed by hardware, or implemented by a combination of these. The software module may reside in a random access memory (RAM), a read only memory (ROM), an erasable programmable ROM (EPROM), an electrically EPROM (EEPROM), a flash memory, a hard disk, a removable disk, a CD-ROM, or any other form of computer readable recording medium well known in the art to which the present invention pertains.

As described above, according to one embodiment of the present invention , a seat track manufacturing process can be automated through an unmanned transport vehicle and a seat track loading/unloading robot, enabling accurate and rapid seat track manufacturing without the need for human labor.

In addition, the loading and unloading and movement of a seat track can be efficient according to an algorithm of an unmanned transport vehicle.

In addition, the manpower required for transporting and managing a seat track and costs associated with the manpower can be reduced.

In addition, by accurately loading a seat track, the position and stability of the seat track can be improved by solving minor errors and misalignment problems.

In addition, seat track production quality and quality data can be managed to improve productivity of a seat track.

In addition, by transmitting coordinates to a robot based on a calculated correction position value and correcting the transmitted coordinates, a car seat track can be accurately seated on a conveyor jig pallet.

In addition, by accurately placing a seat track, the position and stability of the seat track can be improved by solving minute errors and misalignment problems.

In addition, the productivity of a seat track can be improved by managing the seat track production quality and quality data.

The effects of the present invention are not limited to the effects described above, and should be understood to include all effects that can be inferred from the detailed description of the present invention or the composition of the invention described in the claims.

The above description of the present invention is for illustrative purposes, and those skilled in the art will understand that it can be easily modified into other specific forms without changing the technical idea or essential features of the present invention. Therefore, it should be understood that the embodiments described above are exemplary in all respects and not limiting. For example, each component described as a single type may be implemented in a distributed manner, and likewise, components described as distributed may be implemented in a combined form.

The scope of the present invention is indicated by the following claims, and all changes or modified forms derived from the meaning and scope of the claims and their equivalent concepts should be interpreted as being included in the scope of the present invention.

### [Industrial Applicability]

The present invention can be implemented as a seat track loading/unloading system, which an automated seat track manufacturing process is established by improving the position and stability of the seat track and utilizing the unmanned transport vehicles and the seat track loading/unloading robot in the seat track manufacturing process and the seat track manufacturing process is automated, enabling accurate and fast seat track manufacturing without human labor through the unmanned transport vehicle and the seat track loading/unloading robot. However, the present invention can be applied to various industrial fields within the scope of taking on the same configuration as that of the present invention.

## Claims

1. A seat track loading/unloading system comprising:
a cart (100) where a seat track (10) is loaded and unloaded;
an unmanned transport vehicle (200) configured to carry the cart (100);
a seat track loading/unloading robot (300) on which a gripper is mounted to unload the seat track from the cart (100); and
a conveyor (400) on which the seat track (10) is loaded,
wherein the conveyor (400) includes:
a second camera (420) configured to capture an image of a mounting hole or mounting pin of the seat track (10);
a memory (420) configured to store the image acquired from the camera (420);
a second processor (430) configured to calculate a correction position value of the seat track (10) by comparing the stored image with a reference image; and
a second pallet (440) on which the seat track loading/unloading robot loads the seat track.

2. The seat track loading/unloading system of claim 1, wherein the cart (100) includes:
a first pallet (130) where the seat track is loaded and unloaded;
a first camera (110) configured to identify a settlement position; and
a first processor (120) configured to that transmit the correction position value to the seat track loading/unloading robot based on the settlement position of the first camera, and
wherein the first camera (110) is configured to confirm the number of remaining seat tracks in the cart, and the first processor (120) is configured to receive information on the number of remaining seat tracks from the first camera (110) and transmit the received information to the unmanned transport vehicle (200).

3. The seat track loading/unloading system of claim 1 or 2, wherein the unmanned transport vehicle (200) is configured to transport the cart (10) to one of a plurality of predetermined areas and move the cart to a space other than the plurality of areas when all the seat tracks in the cart are unloaded, and
wherein the unmanned transport vehicle (200) further includes a calculation module (210) for calculating a movement path of the unmanned transport vehicle and a shortest waiting time and moves along the movement path that can achieve the shortest waiting time according to the calculation module.

4. The seat track loading/unloading system of one of claims 1 to 3, wherein the seat track loading/unloading robot (300) is configured to unload the seat track from the cart in the area with a fewest number of seat tracks among carts in the plurality of areas.

5. The seat track loading/unloading system of one of claims 1 to 4, wherein the seat track loading/unloading robot (300) is configured to correct a position of the seat track based on the correction value acquired from the second processor (430).

6. The seat track loading/unloading system of one of claims 1 to 5, wherein the second processor (430) is configured to provide a correction value that matches the seat track using a radio frequency ID (RFID) recognition system.

7. The seat track loading/unloading system of one of claims 1 to 6, wherein the second processor (430) is configured to set a feature point based on the mounting hole and the mounting pin and to determine the correction position value based on the feature point, and
wherein, when a position change between a reference feature point and a feature point of a current seat, the second processor determines a position based on three degrees of freedom for a lateral distance difference, a longitudinal distance difference, and an angle.

8. A seat track loading/unloading method comprising:
moving, by an unmanned transport vehicle (200), a cart (100) including a seat track (10) and a first pallet (130) to one of a plurality of predetermined areas;
unloading, by a seat track loading/unloading robot (300), the seat track (10) from the cart (100) positioned in the predetermined area using a correction position value calculated through a first processor (120);
acquiring, by a second camera (420), an image of the seat track (10);
calculating the correction position value through a second processor (430) and loading, by the seat track loading/unloading robot (300), the seat track to a second pallet (440) based on the calculated correction position value; and
allowing the seat track loading/unloading robot (300) to return to an original potion after loading the seat track on the second pallet (440),
wherein the calculating of the correction position value through the second processor (430) and the loading, by the seat track loading/unloading robot (300), of the seat track on the second pallet sets a feature point based on a mounting hole and a mounting pin and corrects a position based on the feature point.

9. The seat track loading/unloading method of claim 8, wherein the moving, by the unmanned transport vehicle (200), of the cart including the seat track to the one of the plurality of predetermined areas includes:
determining, by a calculation module (210), a shortest movement path algorithm of the cart; and
moving the unmanned transport vehicle (200) according to the determined algorithm, and
wherein the unloading, by the seat track loading/unloading robot (300), of the seat track from the cart positioned in the predetermined area using the correction position value calculated through the first processor further includes:
checking the number of seat tracks (10) in the cart for each area;
moving, by the unmanned transport vehicle (200), the cart (100) positioned in the area where all the seat tracks are unloaded to a position other than the plurality of predetermined areas; and
unloading, by the seat track loading/unloading robot (300), the seat track in the area with the fewest number of seat tracks.

10. A system for correcting a loading settlement position of a seat track (10), the system comprising:
a cushion frame robot (510) on which a gripper is mounted to unload a seat track (10);
a camera (520) configured to acquire an image of a mounting hole (12) or mounting pin of the seat track (10);
a memory (530) configured to store the image acquired from the camera; and
a processor (540) configured to compare the stored image with a reference image to calculate a correction position value of the seat track,
wherein the cushion frame robot (510) includes a device that corrects a position of the seat track based on the correction value acquired from the processor, and
the device is configured to:
set a feature point based on the mounting hole and the mounting pin and set the feature point to a reference image;
collect position information of the mounting pin and mounting hole (12) of the reference image and position information of the mounting hole and mounting pin of the captured image of the seat track;
calculate a position change between the position information of the mounting pin and mounting hole (12) of the reference image and the mounting hole and mounting pin of the captured image of the seat track; and
calculate and correct the correction value based on a position change calculation result.

11. The system of claim 10, wherein the processor (540) is configured to provide the correction value that matches a car seat track using a radio frequency ID (RFID) recognition system, and
wherein the processor (540) is configured to set a feature point based on the mounting hole and the mounting pin to correct the position based on the feature point.

12. A method of correcting a loading settlement position of a seat track, the method comprising:
positioning a seat track on a track pallet (S610);
checking a track pallet-settlement position of the seat track (S620);
correcting the track pallet-settlement position of the seat track (S630);
positioning the seat track on a conveyor jig pallet (S640);
checking a conveyor jig pallet-settlement position of the seat track (S650);
correcting the conveyor jig pallet-settlement position of the seat track (S660); and
allowing the cushion frame robot to return to an original position after the seat track is seated on the conveyor jig pallet (S670),
wherein the correcting of the track pallet-settlement position of the seat track includes:
setting a feature point based on a mounting hole and a mounting pin and correcting the track pallet-settlement position based on the feature point;
collecting position information of the mounting pin and mounting hole of a reference image and position information of the mounting hole and mounting pin of a captured image of the seat track;
calculating a position change between the position information of the mounting pin and mounting hole of the reference image and the position information of the mounting hole and mounting pin of the captured image of the seat track;
calculating a correction value of the cushion frame robot based on a position change calculation result; and
correcting, by the cushion frame robot, a loading settlement position of the seat track using the calculation value.

13. The method of claim 12, wherein the correcting of the conveyor jig pallet-settlement position of the seat track sets a feature value based on a mounting hole and a mounting pin to correct a position based on the feature point, and
wherein, when a position change between a reference feature point and a feature point of a current seat is calculated, a position is determined based on three degrees of freedom for a lateral distance difference, a longitudinal distance difference, and an angle.

14. The method of claim 13, wherein the correcting of the conveyor jig pallet-settlement position of the seat track (S660) includes:
collecting the position information of the mounting hole and mounting pin of the reference image and the position information of the mounting hole and mounting pin of the captured image of the seat track (S661);
calculating a position change between the position information of the mounting hole and mounting pin of the reference image and the position information of the mounting hole and mounting pin of the captured image of the seat track (S662);
calculating a correction value of the cushion frame robot based on a position change calculation result (S663); and
correcting, by the cushion frame robot, a loading settlement position of the seat track using the calculation value (S664), and
wherein, when the position change between the reference feature point and the feature point of the current seat is calculated, the position is determined based on three degrees of freedom for a lateral distance difference, a longitudinal distance difference, and an angle.

15. The method of one of claims 12 to 14, wherein the positioning of the seat on the track pallet further includes detecting a radio frequency ID (RFID) tag attached to the seat and acquiring specifications of a component mounted on the seat (S611),
wherein the correcting of the track pallet-settlement position of the seat corrects the track pallet-settlement position based on the specifications of the component acquired through the RFID tag, and
wherein the correcting of the conveyor jig pallet-settlement position of the seat corrects the conveyor jig pallet-settlement position based on the specifications of the component acquired through the RFID tag.
